# EUROPEAN PATENT APPLICATION

(11) **EP 2 469 494 A1**
(43) Date of publication of application: **27.06.2012**
(21) Application number: 10196382.5
(22) Date of filing: 22.12.2010
(51) Int. Cl.: G08C 17/00, G01D 4/00

(54) **Transmission of energy consumption data**

(71) Applicant: Itron GmbH, 76185 Karlsruhe (DE)
(72) Inventor: Zenner, Thorsten, 76316 Malsch (DE)
(74) Representative: Hervouet, Sylvie

(57) **Abstract**

The invention relates to a system (1) for transmitting energy consumption data comprising at least one energy meter (2) located at a customer's end of an energy distribution network for measuring energy consumption and transmitting data including energy consumption data. According to the invention, said system further comprises a gateway module (3) located at said customer's end and adapted to receive said data through a home area network (4), said gateway module (3) being further adapted to convert received data into a television broadcasting signal which can be displayed on the screen of a television set (5).

## Description

The invention generally relates to the transmission of energy consumption data which have been measured by at least one energy meter (electricity, gas or water meter) located at the customer's end of an energy distribution network.

Today, this type of energy meters has few means to enable a gas, electricity and/or water consumer to visualize his own data consumption. Most of the energy meters are only equipped with a mechanical display (totalizer) or, for more recent meters, with LCD displays. These displays do not provide however a convenient way to deliver intelligible information to the consumer.

Some smart meters have been developed with transmission means adapted to transmit consumption data to a remote server of the energy distributor. However, these smart meters are also only equipped with LCD displays, so that the issue of providing intelligible data to a consumer remains unsolved.

In addition, energy meters are often located in hardly accessible places within the consumer's house, sometimes even outside of the house, so that it is not easy for a user to have a feedback on his energy consumption.

Some attempts have been made to develop in-home energy use displays or home energy monitors, adapted to be connected to energy meters. These dedicated displays are however expensive.

Consequently, a real need exists to provide a user-friendly interface for displaying energy consumption data (e. g. consumption over a period, max. or min. load, warnings, recommendations), without requiring costly equipment.

To this end, a first object of the invention is a system for transmitting energy consumption data comprising at least one energy meter located at a customer's end of an energy distribution network for measuring energy consumption and transmitting data including energy consumption data, characterized in that said system further comprises a gateway module located at said customer's end and adapted to receive said data through a home area network, said gateway module being further adapted to convert received data into a television broadcasting signal which can be displayed on the screen of a television set.

A second object of the invention is a method for displaying energy consumption data measured by at least one energy meter located at a customer's end of an energy distribution network, said method comprising the steps of:
- transmitting said data from said energy meter to a gateway module through a home area network;
- converting data received at said gateway module into a television broadcasting signal adapted to be displayed on the screen of a television set and
- transmitting said television broadcasting signal to said television set for displaying said television broadcasting signal on said screen.

Some embodiments of a system in accordance with the present invention are now described, by way of example only, and with reference to the accompanying drawings, in which:
- Figure 1 schematically illustrates a system according to an embodiment of the invention;
- Figure 2 schematically illustrates an alternative embodiment of a system according to the invention;

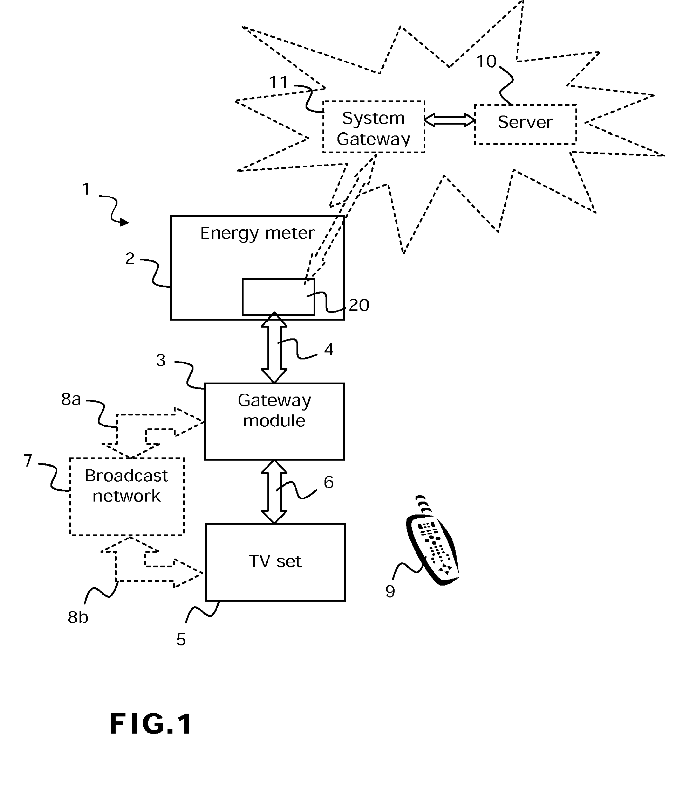

According to a first embodiment of the invention schematically illustrated in figure 1, a system 1 for transmitting energy consumption data comprises at least one energy meter 2 located at a customer's end of an energy distribution network. Energy meter 2 is classically adapted to measure energy consumption and is also provided with transmission means 20 for transmitting data including energy consumption data. Energy consumption data can be transmitted according to a given protocol chosen among a plurality of existing protocols including M-Bus protocol or ZigBee protocol.

The system 1 further comprises a gateway module 3, also located at the customer's end, and adapted to receive said data through a home area network or HAN 4.

Home area network or HAN 4 can be any kind of wireless or wired network, such as a power line network.

Gateway module 3 is further adapted to convert received data into a television broadcasting signal which can be displayed on the screen of a television set 5. Television broadcasting signal is for instance compatible with HDMI or SCART protocol.

For system shown in figure 1, gateway module 3 is adapted to be connected to television set 5 through at least one HDMI cable or one SCART cable 6. Optionally or alternatively, gateway module 3 can also be connected to television set 5 through a broadcast network 7 (terrestrial or satellite or IP broadcast network) and adapted links 8a, 8b.

System 1 advantageously further comprises a remote control device 9 enabling the consumer to control gateway module 3, e.g. for initiating a transmission of data between energy meter 2 and gateway module 3 or interacting with the meter (e.g. change parameters etc.).

In a preferred embodiment of the invention, the energy meter is a smart meter adapted to exchange data with a remote server of the system. This is shown in figure 1 as an optional feature where transmitting means 20 of energy meter 2 can exchange data with remote server 10 through at least one system gateway 11.

It is thus possible for the energy distributor to provide the consumer with additional data to be displayed on the screen of the television set 5 through a communication between remote server 10 and energy meter 2 which is then relayed to gateway module 3 for conversion into a corresponding television broadcasting signal to be displayed on the screen.

These additional data can comprise any kind of data linked to the energy consumption such as tariffs and/or statistics and/or any advises relating to the energy consumption.

Transmissions of data between on the one hand energy meter 2 and gateway module 3, and on the other hand, energy meter 2 and remote server 10 are preferably bidirectional. The user can thus interact in a very friendly manner with the energy distributor through the use of the remote control device 9.

Gateway module 3 is shown in embodiment of figure 1 as equipment which has to be connected to television set 5.

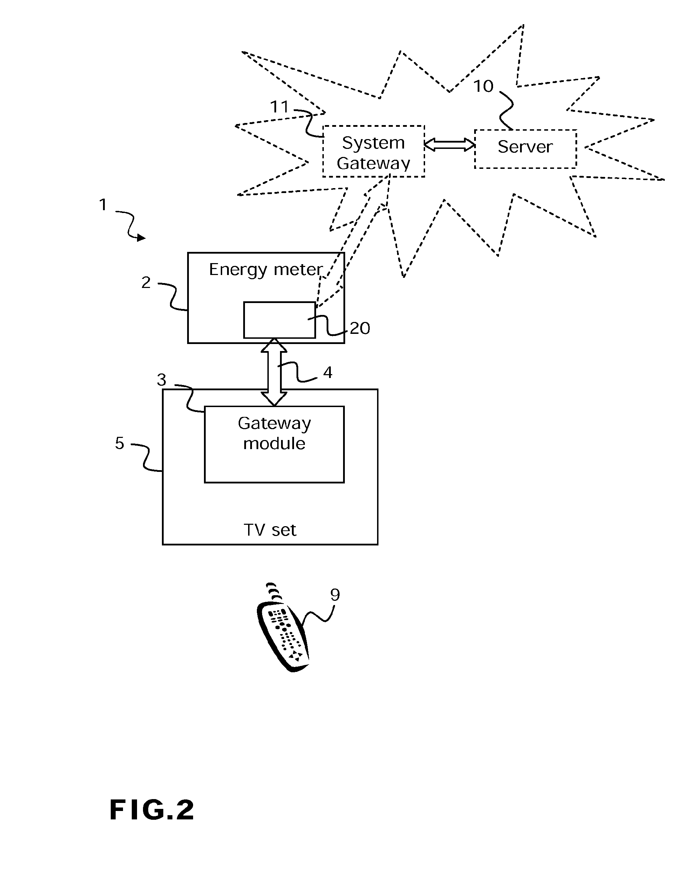

In the alternative embodiment shown in figure 2, gateway module 3 is directly integrated within television set 5. In this case, remote control device for controlling gateway module is integrated within the remote control device 9 used for controlling television set 5.

In any cases, the invention takes advantages of the fact that consumer's houses are generally all equipped with a television set which can be used as a consumer's interface for displaying energy consumption data without the need to have a costly dedicated display.

## Claims

1. System (1) for transmitting energy consumption data comprising at least one energy meter (2) located at a customer's end of an energy distribution network for measuring energy consumption and transmitting data including energy consumption data, **characterized in that** said system further comprises a gateway module (3) located at said customer's end and adapted to receive said data through a home area network (4), said gateway module (3) being further adapted to convert received data into a television broadcasting signal which can be displayed on the screen of a television set (5).

2. System according to claim 1, **characterized in that** said home area network (4) is a wireless network or a wired network.

3. System according to claim 2, **characterized in that** said home area network (4) is a power line network.

4. System according to anyone of the preceding claims, **characterized in that** said energy consumption data are transmitted according to M-Bus protocol or ZigBee protocol.

5. System according to anyone of the preceding claims, **characterized in that** said television broadcasting signal is compatible with HDMI or SCART protocol.

6. System according to anyone of the preceding claims, **characterized in that** said gateway module (3) is adapted to be connected to said television set (5) through at least one HDMI cable or one SCART cable (6).

7. System according to anyone of claims 1 to 5, **characterized in that** said gateway module (3) is integrated within said television set (5).

8. System according to anyone of the preceding claims, **characterized in that** it further comprises a remote control device (9) enabling said consumer to control said gateway module (3).

9. System according to claims 7 and 8, **characterized in that** said remote control device is integrated within a remote control device (9) of said television set (5).

10. System according to anyone of the preceding claims, **characterized in that** it further comprises a remote server (10) adapted to exchange data with said energy meter (2), and to provide additional data to be displayed on the screen of the television set (5) through said energy meter (2) and said gateway module (3).

11. System according to claim 10, **characterized in that** transmissions of data between on the one hand said energy meter (2) and said gateway module (3), and on the other hand, said energy meter (2) and said remote server (10) are bidirectional.

12. System according to claim 10 or claim 11, **characterized in that** said additional data comprise tariffs and/or statistics and/or advises relating to the energy consumption.

13. A method for displaying energy consumption data measured by at least one energy meter (2) located at a customer's end of an energy distribution network, said method comprising the steps of:
- transmitting said data from said energy meter (2) to a gateway module (3) through a home area network (4);
- converting data received at said gateway module (3) into a television broadcasting signal adapted to be displayed on the screen of a television set (5) and
- transmitting said television broadcasting signal to said television set (5) for displaying said television broadcasting signal on said screen.
